# EUROPÄISCHE PATENTSCHRIFT

(11) **EP 1 423 035 B1**
(45) Veröffentlichungstag und Bekanntmachung des Hinweises auf die Patenterteilung: **20.06.2007**
(21) Anmeldenummer: 02762463.4
(22) Anmeldetag: 23.08.2002
(51) Int. Cl.: A47J 19/02, H01H 21/10

(54) **ELEKTRISCHES KÜCHENGERÄT**
ELECTRICAL KITCHEN APPLIANCE
APPAREIL ELECTROMENAGER POUR LA CUISINE

(30) Priorität: 30.08.2001 DE 10142503
(43) Veröffentlichungstag der Anmeldung: 02.06.2004
(73) Patentinhaber: BSH Bosch und Siemens Hausgeräte GmbH, 81739 München (DE)
(72) Erfinder: ZIBRET, Igor, 3327 Smartno ob Paki (SI); PAVLOVIC, Henrik, Ljubno ob Savin 3333 (SI); AREH, Marko, 2360 Radlje ob Dravi (SI)
(86) Internationale Anmeldenummer: PCT/EP2002/009467
(87) Internationale Veröffentlichungsnummer: WO 2003/020095

(56) Entgegenhaltungen:
- EP-A- 0 278 018
- DE-U- 9 205 628
- US-A- 2 849 590
- US-A- 4 620 476

## Beschreibung

Die Erfindung betrifft ein elektrisches Küchengerät insbesondere eine Fruchtpresse, mit einer Antriebseinheit und einem Gehäuse, gemäß dem Oberbegriff von Anspruch 1.

Aus der EP 0 362 058 B1 ist eine durch einen Elektromotor angetriebene Fruchtpresse bekannt. Diese weist einen Drehschalter und sonstige auf der Außenseite ihrer Außenwand angeordnete Schaltmittel zum Betätigen der Fruchtpresse auf.

Aus der US 4,620,476 ist ein gattungsgemäßes elektrisches Küchengerät bekannt mit einer aus unelastischem Material gefertigten Außenwand und Tasten (control buttons), die als gesonderte Bauteile ausgebildet sind.

Die EP 0 278 018 A1 offenbart ein Gehäuse mit einer Tastfläche einer Taste, die eine Teilfläche eines Gehäuses ist.

Schließlich offenbart die DE 92 05 628 U1 ein Tastenfeld, das eine Frontwand aufweist, die mit einer Dekorfolie versehen ist. Die Dekorfolie ist mit einem lichtdurchlässigen Bereich und einem lichtundurchlässigen Bereich flächig geschlossen ausgebildet, so dass kein Teil der Tasten unbedeckt von der Dekorfolie ist.

Es ist die Aufgabe der Erfindung, ein elektrisches Küchengerät zu schaffen, das sich auf einfache Weise benutzen lässt.

Bei einem Küchengerät der eingangs genannten Art wird diese Aufgabe durch eine Merkmals Kombination, wie in Anspruch 1 definiert gelöst.

Gemäß der Erfindung ist es möglich, eine Taste aus dem Material der ersten Außenwand selbst herzustellen, ohne zusätzliche Teile einzusetzen, die dann mit weiterem Aufwand mit der Außenwand verbunden werden müssten. Dadurch lässt sich das Küchengerät auf einfache und schnelle Weise herstellen. Die Bildung der Taste erfolgt in einem einzigen Herstellungsschritt mit der Bildung der ersten Außenwand. Wenn diese aus Kunststoff besteht und in einem Spritzgießverfahren hergestellt wird, wird die Taste zusammen mit der ersten Außenwand als ganzer gegossen. Auf diese Weise lässt sich die Taste sehr kostengünstig fertigen. Durch die einteilige Kombination aus der ersten Außenwand und der Taste entfällt auch der Einsatz von Verbindungselementen zwischen der Taste und der ersten Außenwand. Die Verbindung zwischen der ersten Außenwand und der Taste wird erfindungsgemäß bereits durch die Bereiche verringerter Wandstärke geschaffen. Bei entsprechender Anpassung der Spritzgießform lässt sich die Taste an beliebiger Stelle der ersten Außenwand vorsehen. Es versteht sich, dass sich auch eine Mehrzahl von Tasten, auch verschiedener Dimensionierung auf der ersten Außenwand eines elektrischen Geräts anbringen lässt.

Weitere Vorteile der Erfindung ergeben sich aus den Unteransprüchen und aus der Beschreibung.

In einer vorteilhaften Weiterbildung weist der Bereich zwei erste, im wesentlichen parallel zueinander verlaufende Streifen auf, zwischen denen ein Streifen der ersten Wandstärke verläuft und die entweder die zweite Wandstärke haben oder die als Auslassungen der ersten Außenwand ausgebildet sind. Durch die Auslassung des Materials der Außenwand oder durch die gegenüber dem übrigen Bereich der Außenwand dünnere Ausgestaltung der an das Gebiet, in dem die Taste gebildet wird, angrenzenden Streifen wird erreicht, dass sich die Elastizität des Materials der Außenwand ausnutzen lässt, um den Bereich, der aus demselben Material, aber in geringerer Wandstärke gebildet ist, gegenüber dem Bereich der dickeren Wandstärke zu verbiegen. Wenn die Außenwand eine Konvexe Form hat, reicht es aus, wenn die Streifen in Richtung der Krümmung der Oberfläche der Außenwand verlaufen und in ihnen das Material gänzlich fehlt, um den Bereich zwischen ihnen nach innen durchbiegen zu können.

Bevorzugt ist der Streifen der ersten Wandstärke an einer Stelle kreisförmig verbreitert ist. Auf diese Weise lässt sich der Streifen an der verbreiterten Stelle als Taste nutzen. Darüber hinaus ist es von Vorteil, wenn diese Stelle Griffnoppen trägt.

In einer bevorzugten Variante weist das Küchengerät zwei zweite, ebenfalls im wesentlichen parallel zueinander verlaufende Streifen vorhanden sind, die sich jeweils an die zwei ersten Streifen im wesentlichen unter einem rechten Winkel anschließen und die als Auslassungen der Außenwand ausgebildet sind. Durch diese Anordnung der Streifen wird erreicht, dass sich das Material im Bereich der Taste besonders gut durchbiegen lässt.

Bevorzugt sind die Streifen, auf denen die Taste angeordnet ist und die dieselbe Wandstärke wie die Außenwand haben, von der Außenwand durch Bereiche geringer Wandstärke getrennt, die als Filmscharniere wirken und ein leichtes Verschwenken der Taste ermöglichen. Aufgrund der Elastizität des Materials, aus dem die Außenwand, die Streifen, die Bereiche und die Taste gebildet sind, werden diese und die Streifen nach der Betätigung der Taste wieder in ihre Ausgangslage zurückgeschwenkt.

Um eine Beschädigung der ersten Außenwand zu vermeiden und um das Eindringen von Verschmutzungen in den Innenraum des Küchengeräts zu verhindern ist erfindungsgemäß über die erste Außenwand eine zweite Außenwand geschoben, die unter Auslassung eines wenigstens einen Teil der Oberfläche der Taste einnehmenden Bereichs die erste Außenwand umgibt.

Nachstehend wird die Erfindung in einem Ausführungsbeispiel anhand der Figuren näher erläutert. Es zeigen:
- Fig. 1:: eine Schnittansicht durch einen Abschnitt einer Außenwand eines Gehäuses eines elektrischen Küchengeräts und
- Fig. 2:: eine perspektivische Ansicht der Außenwand.

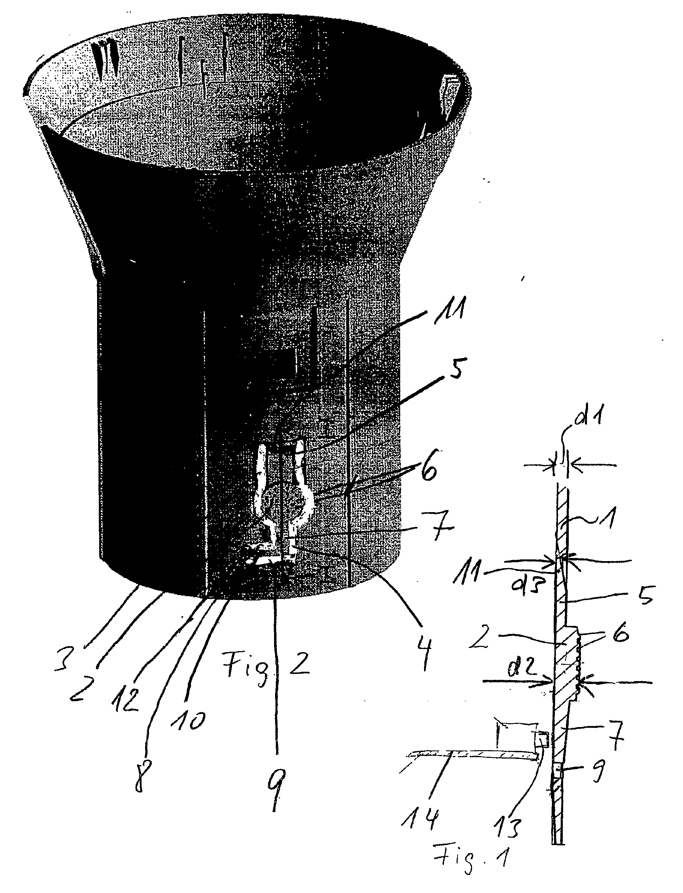

Eine Außenwand 1 (Fig. 1, 2) weist eine Wandstärke der Dicke d1 auf. Seitlich oberhalb, seitlich und seitlich unterhalb eines eine Taste 2 umgebenden Bereichs sind zwei Auslassungen in der Außenwand 1 vorhanden, die als Streifen 3 und 4 ausgebildet sind. Die Taste 2 ist auf einem Streifen 5 angeordnet, der zwischen den Streifen 3 und 4 durch das Material der Außenwand 1 gebildet wird. Die Taste 2 hat eine Wandstärke d2, die vorzugsweise größer ist als die Dicke d1 der Außenwand 1 und des Streifens 5. Die Dicke d2 ist vorzugsweise so gewählt, dass die Taste 2 durch eine zweite, die Außenwand 1 von außen umhüllende Außenwand hindurchragt und von einem Benutzer bequem durch Drücken betätigt werden kann.

Die Taste 2 ist kreisrund ausgestaltet und weist auf ihrer äußeren Oberfläche Noppen 6 auf, wodurch die Oberfläche griffiger ist und die Benutzung erleichtert ist.

Die Streifen 3 und 4 gehen unterhalb eines sich unterhalb der Taste 2 an diese anschließenden und ebenfalls durch den Zwischenraum zwischen den Streifen 3 und 4 gebildeten Streifens 7 in rechtwinklig zu den Streifen 3 und 4 verlaufenden Streifen 8 und 9 über, die ebenfalls Auslassungen in der Außenwand 1 darstellen.

Zwischen den Streifen 8 und 9 verläuft ein sich im rechten Winkel an den Streifen 7 anschließender Streifen 10, der die Dicke d1 der Außenwand 1 hat.

Um zu erreichen, dass sich die Streifen 5, 7 und 10 und somit mit ihnen die Taste 2 leichter durchbiegen lassen, sind an den Übergängen zwischen der Außenwand 1 zu den Streifen 5 und 10 Bereiche 11 und 12 mit verringerter Wandstärke d3 vorgesehen, so dass Filmscharniere in den Bereichen 11 und 12 entstehen. Die Taste 2 lässt sich nach innen drücken und wird aufgrund der Elastizität des Kunststoffs, der die Außenwand 1 und somit auch die Streifen 5, 7 und 10 sowie die Taste 2 bildet, wieder zurück in ihre Ausgangslage bewegt.

Die Taste 2 betätigt einen elektrischen Taster 13 oder einen Schalter, der auf einer Platine 14 im rechten Winkel zu der Außenwand 1 im Innenraum des Küchengeräts angeordnet ist.

Durch die Erfindung wird eine Außenwand 1 für ein elektrisches Küchengerät geschaffen, die durch Bildung von Auslassungen Streifen 5, 7 und 10 ausbildet, auf denen eine Taste 2 angeordnet ist. Da zwischen den Streifen 5 und 10 als Filmscharniere ausgebildete Bereiche 11 und 12 vorhanden sind, lassen sich die Streifen 5, 7 und 10 und somit auch die zwischen ihnen angeordnete Taste 2 verschwenken, um einen elektrischen Taster 13 oder einen Schalter im Inneren des Gehäuses des Küchengeräts zu betätigen.

## Patentansprüche

1. Elektrisches Küchengerät, insbesondere Fruchtpresse, mit einer Antriebseinheit, einem Gehäuse, das eine erste Außenwand (1) mit einer ersten Wandstärke (d1) aufweist und mit einer Taste (2) zur Betätigung eines elektrischen Schaltmittels (13) im Innern des Gehäuses, **dadurch gekennzeichnet, dass** die erste Außenwand (1) aus einem elastischen Material besteht und unter Ausbildung eines Bereichs mit einer zweiten Wandstärke, die geringer ist als die erste Wandstärke (d1), und/oder durch Auslassung eines Teils der ersten Außenwand die Taste (2) in der ersten Außenwand (1) gebildet wird, wobei die erste Außenwand (1) von einer zweiten Außenwand überdeckt ist, die über wenigstens einen Teil der Oberfläche der Taste (2) ausgespart ist.

2. Küchengerät nach Anspruch 1, **dadurch gekennzeichnet, dass** die Taste (2) durch die ausgesparte zweite Außenwand hindurchragt.

3. Küchengerät nach Anspruch 1 oder 2, **dadurch gekennzeichnet, dass** der Bereich zwei erste, im wesentlichen parallel zueinander verlaufende Streifen (3, 4) aufweist, zwischen denen ein Streifen (5, 7) der ersten Wandstärke verläuft und die entweder die zweite Wandstärke haben oder die als Auslassungen der ersten Außenwand (1) ausgebildet sind.

4. Küchengerät nach Anspruch 3, **dadurch gekennzeichnet, dass** der Streifen der ersten Wandstärke an einer Stelle kreisförmig verbreitert ist.

5. Küchengerät nach Anspruch 4, **dadurch gekennzeichnet, dass** die kreisförmig verbreiterte Stelle Griffnoppen (6) trägt.

6. Küchengerät nach einem der Ansprüche 3 bis 5, **dadurch gekennzeichnet, dass** zwei zweite, ebenfalls im wesentlichen parallel zueinander verlaufende Streifen (9, 9) vorhanden sind, die sich jeweils an die zwei ersten Streifen (3, 4) im wesentlichen unter einem rechten Winkel anschließen und die als Auslassungen der Außenwand (1) ausgebildet sind.

7. Küchengerät nach einem der Ansprüche 3 bis 6, **dadurch gekennzeichnet, dass** zwischen den Streifen (3, 4, 8, 9) Bereiche (11, 12) verringerter Wandstärke (d3) vorhanden sind, die als Filmscharniere dienen.

## Claims

1. Electric kitchen appliance, particularly fruit press, with a drive unit, a housing, which has a first outer wall (1) with a first wall thickness (d1) and with a button (2) for actuation of an electrical switching means (13) in the interior of the housing, **characterised in that** the first outer wall (1) consists of a resilient material and the button (2) is formed in the first outer wall (1) through formation of a region with a second wall thickness smaller than the first wall thickness (d1) and/or by omission of a part of the first outer wall, wherein the first outer wall (1) is covered by a second outer wall which is cut away over at least a part of the surface of the button (2).

2. Kitchen appliance according to claim 1, **characterised in that** the button (2) protrudes through the cut-away second outer wall.

3. Kitchen appliance according to claim 1 or 2, **characterised in that** the region has two first strips (3, 4), which extend substantially parallel to one another and between which a strip (5, 7) of the first wall thickness extends, the strips extending substantially parallel to one another either having the second wall thickness or being constructed as omissions of the first outer wall (1).

4. Kitchen appliance according to claim 3, **characterised in that** the strip of the first wall thickness is circularly widened at one place.

5. Kitchen appliance according to claim 4, **characterised in that** the circularly widened place carries grip nubs (6).

6. Kitchen appliance according to one of claims 3 to 5, **characterised in that** two second strips (9, 9) similarly extending substantially parallel to one another are present, which are respectively connected with the two first strips (3, 4) substantially at a right angle and which are formed as omissions of the outer wall (1).

7. Kitchen appliance according to one of claims 3 to 6, **characterised in that** regions (11, 12) of reduced wall thickness (d3), which serve as film hinges, are present between the strips (3, 4, 8, 9).

## Revendications

1. Appareil électroménager de cuisine, notamment un presse-fruits, comprenant une unité d'entraînement, un boîtier présentant une première paroi extérieure (1) munie d'une première épaisseur de paroi (d1) et comprenant une touche (2) pour activer un moyen de commutation électrique (13) à l'intérieur du boîtier, **caractérisé en ce que** la première paroi extérieure (1) est constituée d'une matière élastique et est exécutée en formant une partie ayant une deuxième épaisseur de paroi qui est inférieure à la première épaisseur de paroi (d1), et/ou **en ce que** la touche (2) est formée dans la première paroi extérieure par omission d'une partie de la première paroi extérieure (1), la première paroi extérieure (1) étant recouverte par une deuxième paroi extérieure qui est évidée sur au moins une partie de la surface de la touche (2).

2. Appareil de cuisine selon la revendication 1, **caractérisé en ce que** la touche (2) traverse la deuxième paroi extérieure évidée en la dépassant.

3. Appareil de cuisine selon la revendication 1 ou 2, **caractérisé en ce que** la partie présente deux premières bandes (3, 4) s'étendant essentiellement parallèlement l'une à l'autre, entre lesquelles passe une bande (5, 7) de la première épaisseur de paroi, et qui ont soit la deuxième épaisseur de paroi soit sont exécutées comme omissions de la première paroi extérieure (1).

4. Appareil de cuisine selon la revendication 3, **caractérisé en ce que** la bande de la première épaisseur de paroi est élargie de manière circulaire à un endroit.

5. Appareil de cuisine selon la revendication 4, **caractérisé en ce que** l'endroit élargi de manière circulaire porte des nopes de préhension (6).

6. Appareil de cuisine selon l'une quelconque des revendications 3 à 5, **caractérisé en ce que** deux deuxièmes bandes (8, 9), s'étendant également essentiellement parallèlement l'une à l'autre, sont présentes, qui se raccordent respectivement aux deux premières bandes (3, 4) essentiellement dans un angle droit et qui sont formées en tant qu'omissions de la paroi extérieure (1).

7. Appareil de cuisine selon l'une quelconque des revendications 3 à 6, **caractérisé en ce que** des parties (11, 12) d'épaisseur moindre (d3) sont présentes entre les bandes (3, 4, 8, 9), ces parties servant de charnières flexibles.
